# EUROPEAN PATENT APPLICATION

(11) **EP 2 072 781 A2**
(43) Date of publication of application: **24.06.2009**
(21) Application number: 08171422.2
(22) Date of filing: 12.12.2008
(51) Int. Cl.: F02C 7/228, F23R 3/34, F02M 65/00

(54) **Method for the controlled purging of the fuel feeding system in the combustor of a gas turbine engine**

(30) Priority: 20.12.2007 IT MI20072404
(71) Applicant: Nuovo Pignone Holding S.P.A., 50127 Florence (IT)
(72) Inventor: Tonno, Giovanni, 50127 Firenze (IT); Asti, Antonio, 35134 Padova (IT); Baldassarre, Antonio, 50127 Firenze (IT); Betti, Massimo, 50127 Firenze (IT); D'ercole, Michelle, 50127 Firenze (IT); Paci, Mariateresa, 50127 Firenze (IT); Riva, Stefano, 50127 Firenze (IT); Stewart, Jesse, Taylors SC 29687 (US)
(74) Representative: Illingworth-Law, William Illingworth

(57) **Abstract**

A method is described for the controlled purging of the fuel feeding system in the combustor of a gas turbine comprising at least one compressor (10), capable of compressing the air introduced into it through an inlet duct (12), at least one combustor (14), in which said compressed air is mixed and combusted with a gaseous fuel coming from a feeding duct (16), and at least one turbine (20), capable of transforming the energy of the combusted gas coming from said combustion chamber (14) into work energy which can be exploited for activating one or more operating machines (22). The combustor (14) is equipped with one or more burners (30), each equipped with at least one pilot injector (36) and one or more main injectors (38) for the adduction of the gaseous fuel inside the burner (30). The method comprises purging at least part of the main injectors (38) and relative manifolds (34) with a stream of gaseous fuel when the turbine is in diffusive flame functioning mode and purging the pilot injector (36) and relative manifold (32) with a stream of gaseous fuel when the turbine is in premixed flame functioning mode.

## Description

### BACKGROUND

### Field

The exemplary embodiments generally relate to a method for the controlled purging of the fuel feeding system in the combustor of a gas turbine.

### Brief Description of Related Developments

The use of gas turbines normally consisting of a multiphase compressor, in which air sucked from the outside is compressed, a combustor, in which the combustion takes place of gaseous fuel added to the compressed air, and a turbine or expander, in which the gases coming from the combustor are expanded, is known for the production of electric energy. The turbine is therefore capable of generating mechanical energy which can be exploited for driving operating machines or for charging electric generators, such as for example, one or more alternators.

The combustors currently in use in gas turbines can be distinguished on the basis of two types of functioning. The first is the so-called "diffusive flame", in which the air and gaseous fuel are admitted separately into the burner, according to the classical scheme of turbo-machines, which is still used for aeronautical applications. The second type is called "premixed flame", or is indicated with the acronyms DLN (Dry Low NOx) or LPP (Lean Premixed Prevaporized), in which the air and fuel are previously mixed, allowing a more uniform ratio of mixture to be obtained in the burner, and consequently a cleaner combustion with a considerable reduction in polluting agents.

There are combustors equipped with one or more burners capable of operating on the basis of both of the above modes, whereas the arrangement of the burners themselves inside the combustor can be obtained on the basis of known configurations of the so-called tubular, annular or tube-annular type.

Gas turbines, especially if equipped with a combustor having a plurality of burners, normally require the presence of a ventilation or purging system, where "purging" refers to the periodical cleaning operation of the feeding ducts of the gaseous fuel when the relative line of burners is not in use. Purging is also necessary in all gas turbines in order to eliminate the presence of slag, to avoid so-called "cross-talk" phenomena (interference) between the combustors and prevent the return of hot gases from the combustor towards the outer tubes and feeding lines of the fuel gas, with consequent damage and/or the creation of explosive air/gas mixtures.

The purging is generally effected by means of compressed air, supplied by the main compressor of the machine or a specific compressor, which must be cooled and channeled through suitable pipes equipped with valves, control instruments and other necessary components for enabling the purging system to function correctly and to prevent the accidental mixing between the purging air and gaseous fuel. The purging phase with air also requires relatively long activation and deactivation times, as the system must be activated gradually to avoid high transients with respect to the combustion and plant, and only after the complete isolation of the fuel gas feeding.

Furthermore, the purging system with air envisages load transients with the re-ignition of the inactive burners and additional operation times, as it requires pre-filling of the feeding lines of the burners with fuel gas.

### SUMMARY

An objective of the exemplary embodiments is therefore to provide a method for the purging of the combustor in a gas turbine which is capable of significantly reducing the complexity of the purging system, thus lowering the running costs, the operative activation/deactivation times and considerably increasing the reliability of the system.

A further objective of the exemplary embodiments is to provide a method for the purging of the combustor in a gas turbine which is capable of limiting the transfer times between diffusive combustion mode and premixed combustion mode and vice versa.

Another objective of the exemplary embodiments is to provide a method for the purging of the fuel feeding lines for the combustor of a gas turbine which is particularly effective, safe and capable of avoiding any type of potential damage to the turbine itself.

These and other objectives according to the exemplary embodiments are achieved by providing a method for the purging of the combustor of a gas turbine and, more specifically, a method for the purging of the fuel adduction lines, feeding injectors of the gaseous fuel and burners inside the combustor of a gas turbine as described herein.

### BRIEF DESCRIPTION OF THE DRAWINGS

The characteristics and advantages of a method for the purging of the combustor in a gas turbine according to the present invention will appear more evident from the following illustrative and non-limiting description, referring to the enclosed schematic drawings in which:
figure 1 is a schematic illustration of a gas turbine to which a method for the purging of the combustor according to the exemplary embodiments can be applied;
figure 2 is a schematic transversal sectional view of an example of the combustor of the gas turbine of figure 1; and
figure 3 is a schematic sectional view of the feeding injectors of the gaseous fuel inside the combustor.

### DETAILED DESCRIPTION OF THE EXEMPLARY EMBODIMENT(S)

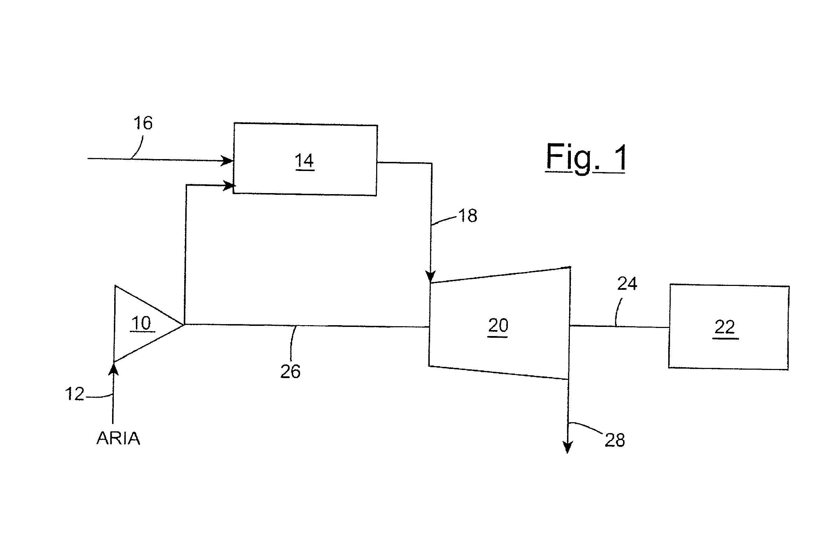

With reference in particular to figure 1, a schematic of a generic gas turbine is shown, preferably of the double shaft type, comprising a compressor 10 capable of compressing the air introduced into it through an inlet duct 12. The compressed air is then sent to a combustor 14 to be mixed with the gaseous fuel coming from a feeding duct 16. The combustion increases the temperature, the speed rate and volume of the gas flow and consequently the energy contained therein. This combusted gas flow is directed, through a duct 18 towards a turbine 20, which transforms the gas energy into work energy that can be exploited for activating operating machines, such as for example a generator 22 connected to the turbine 20 by a shaft 24. The turbine 20 also supplies the energy necessary for activating the compressor 10 through a shaft 26, whereas the discharge gases are expelled by the turbine 20 through an outlet duct 28.

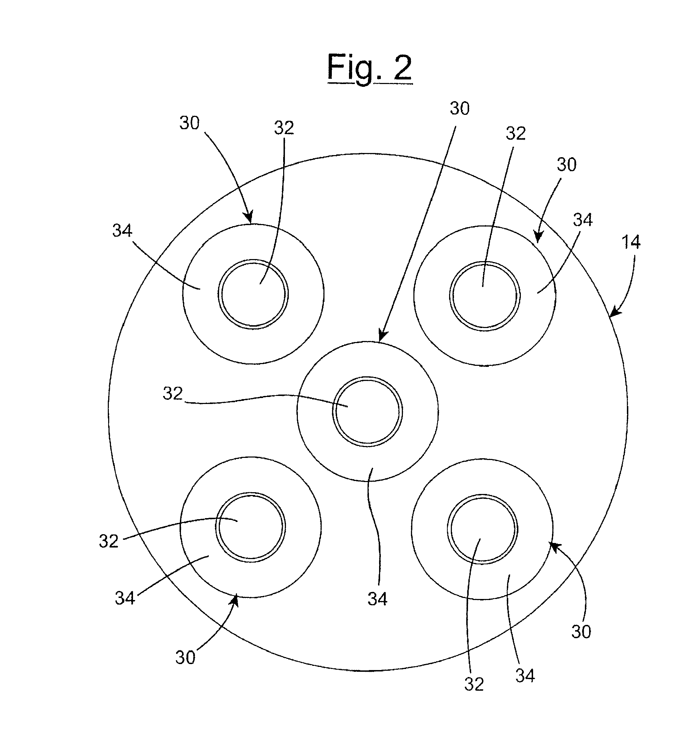

Figure 2 schematically shows, in a transversal section, an exemplary combustor 14, of the multi-tubular type, in accordance with an exemplary embodiment. The combustor 14 is equipped with a plurality of burners 30 arranged circumferentially around the axis of the combustor 14.

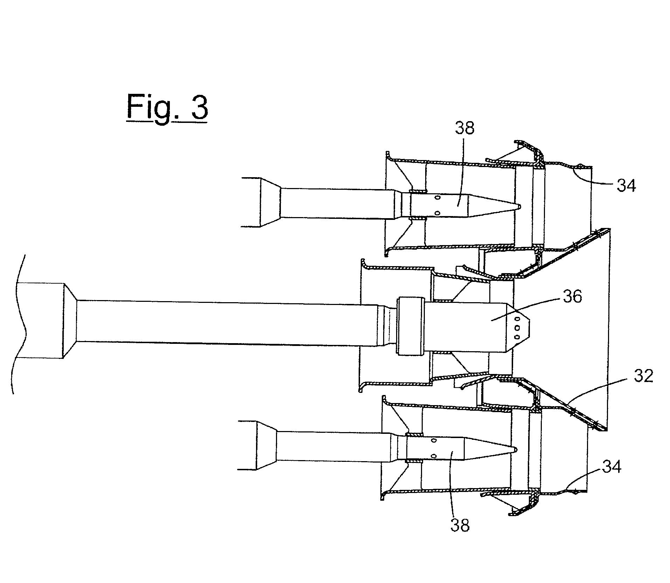

Each burner 30 is put in connection with at least a first manifold 32 and at least a second fuel adduction manifold 34 and is equipped with at least one pilot injector 36 (figure 3) and one or more main injectors 38 (figure 3) for the adduction of the gaseous fuel inside the burner 30. The pilot injector 36, situated in correspondence with the first adduction manifold 32, consists of a combustion nozzle capable of functioning in diffusive flame mode and is therefore activated in the ignition phase of the turbine. The main injectors 38, generally arranged around the pilot injector 32 in correspondence with the second adduction manifold 34, are capable of preparing the air/fuel mixture to allow the normal functioning of the turbine, in premixed flame mode.

According to the exemplary embodiments, at least part of the main injectors 38 and relative fuel adduction manifolds 34 of each burner 30 of the turbine are ventilated or purged only when not in use, i.e. when the turbine is in diffusive flame functioning mode, with a flow, preferably constant, of the same fuel gas or possibly a mixture consisting of fuel gas and a controlled quantity of air, instead of with an air flow. In this way, it is not necessary to equip each burner 30 with a compressed air purging system, thus avoiding the installation of pipes, valves, control instruments and other specific components.

The pressure of the gaseous fuel, when used in the purging phase of each burner 30, must be regulated so as to be greater than the pressure measured inside the combustor 14, in order to prevent the counterflow of the same gas through the injectors 38 and to prevent the formation of condensate inside the feeding duct 16 of the fuel during the purging phase.

It is also possible, again in the diffusive flame operational mode, i.e. in the ignition phase of the turbine, to extend the purging phase with the flow, preferably constant, of fuel gas or air/fuel gas mixture to all the fuel adduction manifolds 34 for the premixed functioning mode, after measuring and evaluating the pressure and temperature dynamics inside the combustor 14.

In addition, the pilot injector 36 and relative fuel adduction manifold 32 can also be involved in the purging phase by means of a preferably constant flow of fuel gas or air/fuel gas mixture when they are not in use, i.e. when the turbine is operating in premixed flame mode (normal functioning). In this way, it is possible to completely eliminate the purging system with compressed air from all the burners 30 of the combustor 14, with a consequent reduction in the number of valves, ducts and control instruments to be applied to the turbine.

It can thus be seen that the method for the purging of the combustor in a gas turbine according to the exemplary embodiments achieves the objectives indicated above. In particular, it is capable of providing the following advantages:
● reduction in the running costs of the purging system;
● increase in the reliability of the purging system;
● elimination of the activation and deactivation times of the purging;
● elimination of the pre-filling times of the purged lines with fuel gas;
● elimination of the load transients due to the re-ignition of the inactive burners; and
● elimination of the load transients due to the thrust of fuel gas in the combustion chamber upon activation of the purging air.

The method for the purging of the combustor in a gas turbine according to the exemplary embodiments can in any case undergo numerous modifications and variants, all included in the same inventive concept.

The protection scope of the invention is therefore defined by the enclosed claims.

## Claims

1. A method for the controlled purging of the fuel feeding system in the combustor of a gas turbine comprising at least one compressor (10), capable of compressing the air introduced into it through an inlet duct (12), at least one combustor (14), in which said compressed air is mixed and combusted with a gaseous fuel coming from a feeding duct (16), and at least one turbine (20), capable of transforming the energy of the combusted gas coming from said combustion chamber (14) into work energy which can be exploited for activating one or more operating machines (22), wherein said at least one combustor (14) is equipped with one or more burners (30), each equipped with at least one pilot injector (36) and one or more main injectors (38) for the adduction of the gaseous fuel inside said burner (30), the method comprising: purging at least part of said one or more main injectors (38) and relative manifolds (34) with a stream of said gaseous fuel when said turbine is in diffusive flame functioning mode.

2. The method according to claim 1, further comprising regulating the pressure of said gaseous fuel used in the purging of at least part of said one or more main injectors (38) and relative manifolds (34), so that said pressure of said gaseous fuel during said purging is greater than the pressure measured inside said combustor (14), in order to prevent the counterflow of said gaseous fuel through said one or more main injectors (38) and prevent the formation of condensate inside said feeding duct (16) during said purging.

3. The method according to claim 1 or claim 2, further comprising purging said pilot injector (36) and relative manifold (32) with a flow of said gaseous fuel when said turbine is in premixed flame functioning mode.

4. The method according to any one of the preceding claims, wherein said flow of gaseous fuel, used in the purging of at least part of said one or more main injectors (38) and relative manifolds (34), is a constant flow.

5. The method according to any one of the preceding claims, wherein said gaseous fuel, used in the purging of at least part of said one or more main injectors (38) and relative manifolds (34), is mixed with a controlled quantity of air.

6. A method for the controlled purging of the fuel feeding system in the combustor of a gas turbine comprising at least one compressor (10), capable of compressing the air introduced into it through an inlet duct (12), at least one combustor (14), in which said compressed air is mixed and combusted with a gaseous fuel coming from a feeding duct (16), and at least one turbine (20), capable of transforming the energy of the combusted gas coming from said combustion chamber (14) into work energy for activating one or more operating machines (22), wherein said at least one combustor (14) is equipped with one or more burners (30), each equipped with at least one pilot injector (36) and one or more main injectors (38) for the adduction of the gaseous fuel inside said burner (30), the method comprising: purging said pilot injector (36) and the relative manifold (32) with a stream of said gaseous fuel when said turbine is in premixed flame functioning mode.

7. The method according to claim 6, further comprising regulating the pressure of said gaseous fuel used in the purging of said pilot injector (36) and the relative manifold (32), so that said pressure of said gaseous fuel during said purging is greater than the pressure measured inside said combustor (14), in order to prevent the counterflow of said gaseous fuel through said pilot injectors (36) and prevent the formation of condensate inside said feeding duct (16) during said purging.

8. The method according to claim 6 or claim 7, wherein said flow of gaseous fuel, used in the purging of said pilot injector (36) and relative manifold (32), is a constant flow.

9. The method according to any one of claims 6 to 8, wherein said gaseous fuel, used in the purging of said pilot injector (36) and relative manifold (32), is mixed with a controlled quantity of air.
